# EUROPÄISCHE PATENTANMELDUNG

(11) **EP 3 128 446 A1**
(43) Veröffentlichungstag der Anmeldung: **08.02.2017**
(21) Anmeldenummer: 16170245.1
(22) Anmeldetag: 19.05.2016
(51) Int. Cl.: G06F 17/30

(54) **VERFAHREN ZUM ERZEUGEN DES EINDRUCKS VON ERWEITERTER REALITÄT**

(30) Priorität: 07.08.2015 DE 102015113097
(71) Anmelder: Scheid, Ralf, 90516 Zirndorf (DE)
(72) Erfinder: Scheid, Ralf, 90516 Zirndorf (DE)
(74) Vertreter: Dr. Gassner & Partner mbB

(57) **Zusammenfassung**

Die Erfindung betrifft ein Verfahren zum Erzeugen des Eindrucks von erweiterter Realität, mit den folgenden Schritten:
- Scannen eines optisch lesbaren Markers (19) mit einem Mobilgerät (18),
- Erfassen von in dem optisch lesbaren Marker (19) enthaltenen Daten,
- Aufbauen einer Verbindung zu einem Datenbank-Server (4) durch eine Client-Software (3),
- Abrufen von Objektdaten durch die Client-Software (3) von dem Datenbank-Server (4) anhand der in dem optisch lesbaren Marker (19) enthaltenen Daten, wobei die Objektdaten eine Adresse für 3D-Daten umfassen,
- Abrufen der 3D-Daten von dem Datenbank-Server (4) oder einem Daten-Server (7), und
- Darstellen eines auf den 3D-Daten beruhenden virtuellen Modells auf einer Anzeigefläche (20) des Mobilgeräts (18).

## Beschreibung

Die Erfindung betrifft ein Verfahren zum Erzeugen des Eindrucks von erweiterter Realität.

Der Begriff "Virtuelle Realität (VR)" bezeichnet die Darstellung und Wahrnehmung in einer interaktiven, virtuellen Umgebung. Ein Benutzer befindet sich dabei in einer Computer-generierten Welt. Virtuelle Realität wird beispielsweise für Simulationen oder für Ausbildungszwecke genutzt.

Der Begriff "Augmented Reality (AR)" oder erweiterte Realität bezeichnet die Verknüpfung einer realen mit einer virtuellen Darstellung. Mittels erweiterter Realität kann somit eine tatsächlich existierende, vom Benutzer wahrnehmbare Umgebung um virtuelle Elemente ergänzt werden, so dass Informationen dem Benutzer auf verschiedenen Ebenen vermittelt werden können.

Die Nutzung von erweiterter Realität war bisher zumeist auf stationäre Anwendungen beschränkt. Daher ist ein Verfahren wünschenswert, das zum Erzeugen des Eindrucks von erweiterter Realität auf einem Mobilgerät geeignet ist. Ein Mobilgerät kann z. B. ein Smartphone oder ein Tablet-Computer sein.

Der Erfindung liegt daher die Aufgabe zu Grunde, ein Verfahren anzugeben, das zum Erzeugen eines Eindrucks von erweiterter Realität auf einem Mobilgerät geeignet ist.

Zur Lösung dieser Aufgabe ist ein Verfahren mit den Schritten des Anspruchs 1 vorgesehen.

Das erfindungsgemäße Verfahren umfasst die folgenden Schritte:
- Scannen eines optisch lesbaren Markers mit einem Mobilgerät,
- Erfassen von in dem optisch lesbaren Marker enthaltenen Daten,
- Aufbauen einer Verbindung zu einem Datenbank-Server durch eine Client-Software,
- Abrufen von Objektdaten durch die Client-Software von dem Datenbank-Server anhand der in dem optisch lesbaren Marker enthaltenen Daten, wobei die Objektdaten eine Adresse für 3D-Daten umfassen,
- Abrufen der 3D-Daten von dem Datenbank-Server oder einem Daten-Server, und
- Darstellen eines auf den 3D-Daten beruhenden virtuellen Modells auf einer Anzeigefläche des Mobilgeräts.

Das erfindungsgemäße Verfahren ermöglicht das Erzeugen des Eindrucks von erweiterter Realität an einem beliebigen Ort. Es ist dazu lediglich erforderlich, dass sich auf dem Mobilgerät des Benutzers die Client-Software befindet. Wenn der Benutzer den optisch lesbaren Marker mit dem Mobilgerät scannt, werden die in dem optisch lesbaren Marker enthaltenen Daten erfasst. Diese Daten werden nach dem Aufbau einer Verbindung zu dem Datenbank-Server gesendet und dienen als Referenz, wodurch der Marker mit bestimmten Objektdaten verknüpft wird. Anschließend erfolgt durch die Client-Software ein Abruf der Objektdaten von dem Datenbank-Server anhand der in dem optisch lesbaren Marker enthaltenen Daten. Die Objektdaten umfassen dabei eine Adresse für 3D-Daten und ggf. weitere Parameter oder Informationen, die für die Darstellung erforderlich sind. Im Anschluss daran erfolgt das Abrufen der 3D-Daten von dem Datenbank-Server oder einem (anderen) Daten-Server. Es wird jedoch darauf hingewiesen, dass das erfindungsgemäße Verfahren auch so implementiert sein kann, dass der Datenbank-Server, der primär Adressen der 3D-Daten in einem Speicher umfasst, auch integral mit dem Daten-Server ausgebildet sein kann. In diesem Fall liegt ein einziger Daten-Server vor, der sowohl die Adressen der 3D-Daten als auch die 3D-Daten selbst umfasst.

Im nächsten Schritt des erfindungsgemäßen Verfahrens erfolgt das Darstellen eines auf den 3D-Daten beruhenden virtuellen Modells auf einer Anzeigefläche des Mobilgeräts.

Das virtuelle Modell ist vorzugsweise ein dreidimensionales Modell. Bei dem erfindungsgemäßen Verfahren sind das Mobilgerät und der Datenbank-Server bzw. der Daten-Server vorzugsweise über ein drahtloses Kommunikationsnetzwerk, wie ein WLAN-Netzwerk oder ein Mobilkommunikationsnetzwerk, miteinander verbunden. Alternativ können das Mobilgerät und der Datenbank-Server bzw. der Daten-Server auch über ein drahtgebundenes Netzwerk, wie ein Ethernet-Netzwerk, miteinander verbunden sein.

Der optisch lesbare Marker kann ein eindimensionaler oder zweidimensionaler optisch lesbarer Code sein, beispielsweise ein Strichcode, ein QR-Code oder ein DataMatrix-Code.

Das erfindungsgemäße Verfahren bietet den Vorteil, dass ein Benutzer gezielt ein bestimmtes virtuelles Modell herunterladen kann, für das er sich interessiert. Anhand der übertragenen 3D-Daten wird im Rahmen des erfindungsgemäßen Verfahrens der Eindruck von erweiterter Realität erzeugt.

Gemäß einer bevorzugten Ausgestaltung des erfindungsgemäßen Verfahrens werden ein reales Objekt und das virtuelle Modell auf der Anzeigefläche des Mobilgeräts überlagert dargestellt. Der Eindruck von erweiterter Realität entsteht somit durch eine Überlagerung eines realen Objekts, beispielsweise eines Fotos oder eines anderen Bilds und des virtuellen Modells. Vorzugsweise kann das reale Objekt Bestandteil eines Druckerzeugnisses sein. Das reale Bild kann beispielsweise Bestandteil einer Zeitschrift, einer Zeitung, eines Prospekts, eines Katalogs oder eines Kalenderblatts sein. Bei dem erfindungsgemäßen Verfahren wird das reale Objekt mittels einer Kamera des Mobilgeräts erfasst. Diese Kamera befindet sich üblicherweise an der der Anzeigefläche entgegengesetzten Seite. Bei der Durchführung des erfindungsgemäßen Verfahrens wird dem Betrachter somit der Eindruck vermittelt, dass er das Mobilgerät ähnlich wie bei der Anfertigung eines Fotos verwendet, wobei auf der Anzeigefläche des Mobilgeräts ein von der Kamera des Mobilgeräts aufgenommenes Bild ähnlich wie bei einem Sucher einer Kamera dargestellt wird.

Zusätzlich wird auf der Anzeigefläche des Mobilgeräts das auf den 3D-Daten beruhende virtuelle Modell angezeigt. Dadurch ergibt sich die überlagerte Darstellung des realen Objekts und des virtuellen Modells, wodurch der Eindruck von erweiterter Realität erzeugt wird.

Im Rahmen der Erfindung wird es besonders bevorzugt, dass durch Bewegen des Mobilgeräts relativ zu dem optisch lesbaren Marker die Darstellung des virtuellen Modells auf der Anzeigefläche verändert wird. Der Marker, ggf. auch das reale Objekt, dient dabei als Referenzpunkt für die Darstellung des virtuellen Modells. Die Client-Software umfasst somit ein Anzeigeprogramm, mit dem das dreidimensionale virtuelle Modell auf der Anzeigefläche des Mobilgeräts dargestellt werden kann. Das Anzeigeprogramm ist vorzugsweise ein 3D-Browser, der eine räumliche Darstellung von dreidimensionalen Modellen ermöglicht. Indem der Benutzer das Mobilgerät relativ zu dem realen Objekt, insbesondere relativ zu dem Druckerzeugnis, genauer gesagt relativ zu dem Marker, bewegt, kann er die Darstellung des virtuellen Modells auf der Anzeigefläche beeinflussen und ändern. Wenn er das Mobilgerät in die Nähe des Markers bewegt, wird das virtuelle Modell vergrößert dargestellt, wodurch eine Zoom-Funktion realisiert wird. Umgekehrt bewirkt eine Vergrößerung des Abstands eine Verkleinerung der Darstellung des realen Objekts auf der Anzeigefläche des Mobilgeräts. In ähnlicher Weise kann durch eine Drehung des Mobilgeräts relativ zu dem Marker der Winkel geändert werden, unter dem das virtuelle Modell auf der Anzeigefläche dargestellt wird. Dementsprechend kann der Benutzer das Modell durch eine entsprechende Bewegung des Mobilgeräts von allen Seiten betrachten, wobei er den Blickwinkel und den Vergrößerungsfaktor beeinflussen kann.

Im Rahmen der Erfindung kann es auch vorgesehen sein, dass beim Berühren einer auf der Anzeigefläche angezeigten Schaltfläche eine Aktion ausgelöst wird. Die Anzeigefläche des Mobilgeräts ist vorzugsweise für Touch-Eingaben ausgebildet. Dementsprechend können auf der Anzeigefläche Schaltflächen anzeigt werden, die durch "Antippen" ausgewählt werden, um eine Aktion auszulösen. Das Anwählen einer Schaltfläche kann beispielsweise bewirken, dass ein anderer Bereich des virtuellen Modells angezeigt wird. Ebenso ist es möglich, dass durch eine Touch-Eingabe eine bestimmte Funktion des virtuellen Modells gestartet wird. Beispiele dafür sind die Inbetriebnahme einer Maschine, die Auswahl eines anderen Raums eines virtuellen Modells eines Gebäudes oder die Eingabe eines bestimmten Werts bei der Steuerung einer Maschine durch die Touch-Eingabe. Die Touch-Eingabe kann im einfachsten Fall durch Antippen der Anzeigefläche erfolgen. Eine Touch-Eingabe kann jedoch auch durch zwei Finger vorgenommen werden, wobei das Bewegen der beiden Finger zueinander eine Verkleinerung und das Bewegen der zwei Finger auseinander eine Vergrößerung des auf der Anzeigefläche dargestellten virtuellen Modells bewirkt. Das Drehen eines Fingers oder beider Finger kann eine entsprechende Drehung des virtuellen Modells bewirken.

Es liegt auch im Rahmen der Erfindung, dass beim Auslösen der Aktion eine Animation und/oder eine Audiodatei abgespielt und/oder ein Text eingeblendet wird. Die Animation kann beispielsweise ein Film sein, um dem Benutzer bestimmte Informationen zu vermitteln. In ähnlicher Weise können dem Benutzer durch Abspielen einer Audiodatei Informationen vermittelt werden. Es ist auch möglich, dass durch Berühren einer Schaltfläche ein Text oder eine Bild-Text-Darstellung eingeblendet wird. Besonders bevorzugt wird es bei dem erfindungsgemäßen Verfahren, dass das virtuelle Modell verschiedene Komponenten umfasst, die durch eine Touch-Eingabe eingeblendet oder ausgeblendet oder verschoben oder gedreht oder in Bewegung gesetzt werden können. Daneben können weitere Eigenschaften beeinflusst werden. Beispielsweise kann die Farbe oder die Oberflächenstruktur einer Komponente geändert werden. Es kann auch vorgesehen sein, dass der Benutzer die Größe und/oder Form einer Komponente des virtuellen Modells beeinflussen kann. Beispielsweise kann er in einer virtuellen Darstellung eines Raums innerhalb eines Gebäudes die Position und/oder Größe von Möbeln oder anderen Einrichtungsgegenständen verändern und die einzelnen Komponenten nach seinen Vorstellungen anordnen.

In diesem Zusammenhang kann es bei dem erfindungsgemäßen Verfahren auch vorgesehen sein, dass das virtuelle Modell in einer Panoramadarstellung angezeigt wird. Durch die Panoramadarstellung wird dem Benutzer zum Beispiel der Eindruck vermittelt, dass er sich in einem Raum eines Gebäudes befindet. Die Panoramadarstellung ermöglicht dabei eine virtuelle Drehung des Benutzers über einen bestimmten Winkelbereich. Vorzugsweise umfasst dieser Winkelbereich 360°. Derartige Panoramadarstellungen können mit einer speziellen Kameraausrüstung aufgenommen werden. Die Panoramadarstellung erzeugt einen besonders wirklichkeitsnahen Eindruck. Dem Benutzer kann z. B. der Eindruck vermittelt werden, dass er sich in dem Raum des Gebäudes um 360° um seine Achse drehen kann.

Im Rahmen der Erfindung kann es auch vorgesehen sein, dass das virtuelle Modell verschiedene Bereiche umfasst, wobei der Benutzer durch eine Eingabe von einem Bereich in einen anderen Bereich oder Abschnitt gelangt. Beispielsweise kann der Benutzer von einem Raum eines Gebäudes in einen benachbarten Raum gelangen. In ähnlicher Weise kann er benachbarte Bereiche einer Maschine oder einer technischen Anlage betrachten oder "durchwandern".

Bei dem erfindungsgemäßen Verfahren wird es bevorzugt, dass das virtuelle Modell nach dem Abrufen von dem Datenbank-Server oder dem Daten-Server in einem Speicher des Mobilgeräts gespeichert wird. Dadurch ergibt sich der Vorteil, dass das virtuelle Modell zu einem späteren Zeitpunkt wieder aufgerufen werden kann, ohne dass die Daten über eine drahtlose oder drahtgebundene Datenverbindung erneut übertragen werden müssen.

Bei dem erfindungsgemäßen Verfahren kann es auch vorgesehen sein, dass beim Anwählen einer Schaltfläche eine Funktion zum Senden einer E-Mail oder zum Aufbau einer Telefonverbindung gestartet wird. Diese Funktionen ermöglichen eine Kontaktaufnahme des Benutzers. Beispielsweise kann er auf diese Weise mit einem Berater oder einem Callcenter Kontakt aufnehmen, der bzw. das ihm weitere Informationen zur Verfügung stellen kann. Es ist auch möglich, dass der Benutzer alle für die Darstellung des virtuellen Modells erforderlichen Daten an einen Empfänger weiterleitet, so dass dieser das virtuelle Modell ebenfalls betrachten kann.

Bei dem erfindungsgemäßen Verfahren wird vorzugsweise ein Gerät der folgenden Gruppe als Mobilgerät verwendet: Smartphone, Tablet-Computer, Notebook mit berührungssensitiver Anzeigefläche, Videobrille, Datenbrille, Helmdisplay, VR-Helm. Alle genannten Geräte besitzen eine Anzeigefläche sowie eine oder mehrere Eingabemöglichkeiten, beispielsweise eine Tastatur, eine berührungssensitive Anzeigefläche oder andere Eingabegeräte wie Schalter, Taster oder eine Sprachsteuerung.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: ein Flussdiagramm mit den wesentlichen Schritten des erfindungsgemäßen Verfahrens,
- Fig. 2: ein Druckerzeugnis mit einem Marker,
- Fig. 3: ein Mobilgerät, auf dessen Anzeigefläche ein virtuelles Modell dargestellt wird,
- Fig. 4: eine Darstellung eines weiteren Ausführungsbeispiels des erfindungsgemäßen Verfahrens, und
- Fig. 5: eine Darstellung eines weiteren Ausführungsbeispiels des erfindungsgemäßen Verfahrens.

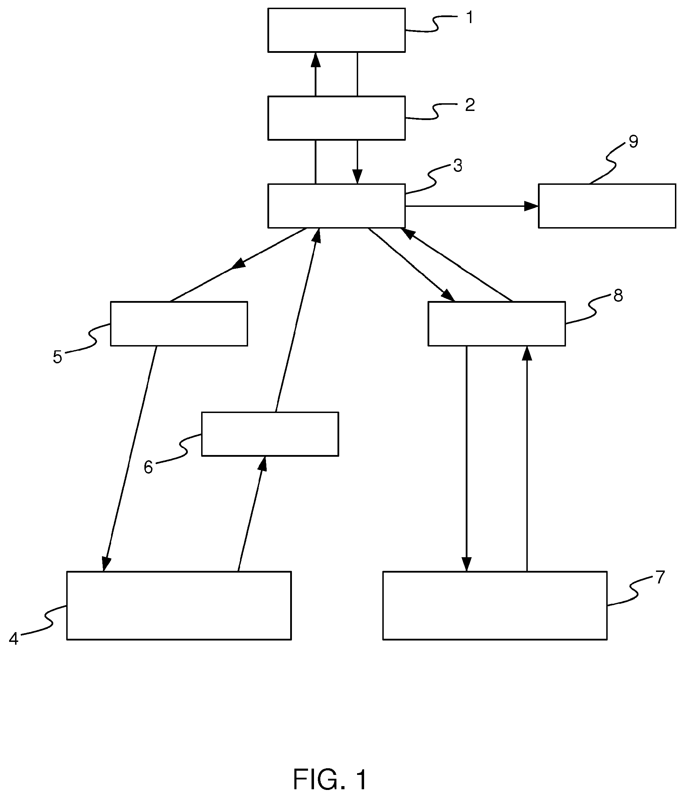

Fig. 1 ist ein Flussdiagramm und zeigt die wesentlichen Schritte des Verfahrens zum Erzeugen des Eindrucks von erweiterter Realität. Im Schritt 1 des Verfahrens scannt ein Benutzer mit einem Mobilgerät, wie z. B. ein Smartphone oder ein Tablet-Computer, einen optisch lesbaren Marker ein. Der optisch lesbare Marker kann ein QR-Code oder ein anderer eindimensionaler oder zweidimensionaler Code sein. Der Marker kann jedoch auch in einem Foto, einer Grafik oder in einem Bild für das menschliche Auge unsichtbar angeordnet sein. Durch ein Mustererkennungsverfahren kann ein solcher Marker jedoch detektiert werden. Im Schritt 2 liest eine Client-Software 3, die auch als "App" bezeichnet wird und die auf dem Mobilgerät implementiert ist, den Marker, d. h. die darin enthaltenen Daten. Die Client-Software 3 baut anschließend eine Verbindung mit einem Datenbank-Server 4 auf. In dem dargestellten Ausführungsbeispiel wird die Verbindung über ein drahtloses Kommunikationsnetzwerk, wie z. B. ein WLAN-Netzwerk oder ein Mobilkommunikationsnetzwerk, hergestellt. Im Schritt 5 ruft die Client-Software 3 Objektdaten von dem Datenbank-Server 4 ab. Auf dem Datenbank-Server 4 sind Projekte und/oder Objekte gespeichert. In diesem Ausführungsbeispiel handelt es sich bei den Objekten um Immobilien, wie Häuser, Wohnungen, Grundstücke und dgl. In der Datenbank des Datenbank-Servers 4 sind allgemeine Daten der Projekte und/oder Objekte sowie eine oder mehrere Adressen von 3D-Daten hinterlegt. Bei anderen Ausführungsbeispielen können im Datenbank-Server 4 auch dynamische Daten gespeichert sein.

Im nächsten Schritt 6 sendet der Datenbank-Server 4 passende, an die jeweilige Anfrage der Client-Software 3 angepasste Daten an die auf dem Mobilgerät vorhandende Client-Software 3 zurück. Diese Daten umfassen insbesondere eine Adresse für 3D-Daten, die auf einem Daten-Server 7 hinterlegt sind.

Anschließend stellt die Client-Software 3 eine Verbindung zu dem Daten-Server 7 her, um objektspezifische 3D-Daten von dem Daten-Server 7 herunterzuladen. Das Herunterladen der 3D-Daten im Schritt 8 erfolgt somit anhand der von dem Datenbank-Server 4 abgerufenen 3D-Daten. Im nächsten Schritt 9 rendert die Client-Software 3 die von dem Daten-Server 7 erhaltenen 3D-Daten und stellt diese auf einer Anzeigefläche (Bildschirm) des Mobilgeräts dar. Auf dem Daten-Server 7 sind 3D-Daten einer Vielzahl von Objekten hinterlegt, die von der Client-Software 3 nach Bedarf geladen werden. Beispielsweise kann dort eine Vielzahl von Immobilienangeboten, denen jeweils ein Marker in einem Druckerzeugnis zuordnet ist, hinterlegt sein.

Es wird darauf hingewiesen, dass der Datenbank-Server 4 und der Daten-Server 7 auch als ein einziger Server mit einer einzigen Datenbank ausgebildet sein kann.

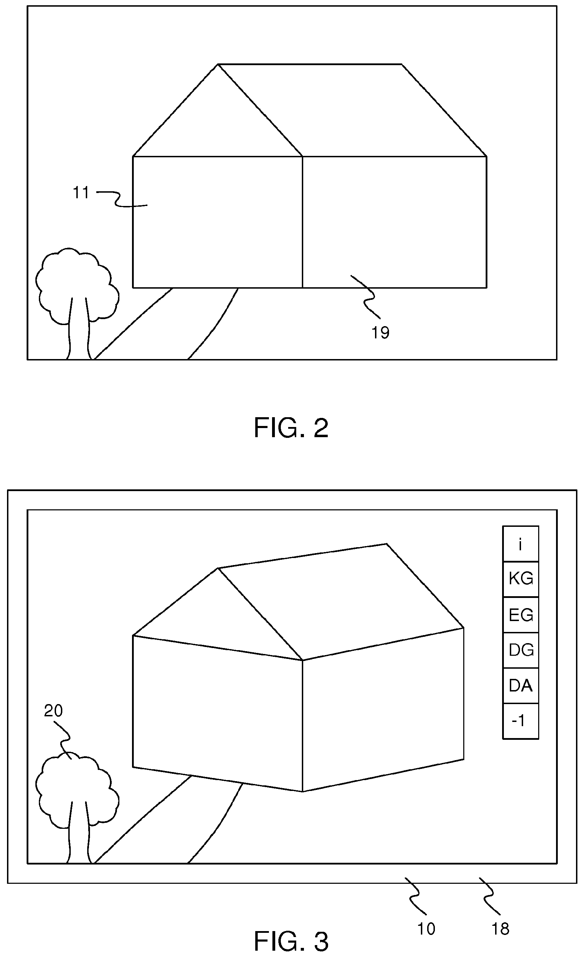

Fig. 2 zeigt schematisch ein zweidimensionales Foto eines Hauses 11. Dieses Foto ist Bestandteil eines Prospekts oder eines Aushangs oder dgl. In dem Foto ist ein für das menschliche Auge nicht sichtbarer Marker 19 versteckt, der nach dem Scannen durch das Mobilgerät von der Client-Software 3 detektiert wird.

Fig. 3 ist eine schematische Darstellung und zeigt ein als Tablet-Computer 10 ausgebildetes Mobilgerät 18 während der Durchführung des Verfahrens zum Erzeugen des Eindrucks von erweiterter Realität. In Fig. 3 ist erkennbar, dass das Haus 11, das auf dem in Fig. 2 gezeigten, als Foto ausgebildeten Druckerzeugnis lediglich zweidimensional sichtbar ist, auf einer Anzeigefläche 20 des Tablet-Computers 10 dreidimensional dargestellt wird. Man erkennt auch, dass der Betrachter eine überlagerte Darstellung sieht, da in den Randbereichen der Anzeigefläche 20 der Rand des in Fig. 2 gezeigten Fotos und im Zentrum die dreidimensionale Darstellung des Hauses 11 dargestellt wird. Auf diese Weise wird eine kombinierte Darstellung erzeugt, die sowohl reale als auch virtuelle Bestandteile umfasst.

In Fig. 3 erkennt man ferner, dass auf der Anzeigefläche 20 des Tablet-Computers 10 am rechten Bildrand verschiedene Schaltflächen dargestellt werden, die sich auf unterschiedliche Geschosse oder Ansichten des Hauses 11 beziehen. KG bedeutet in diesem Zusammenhang "Kellergeschoss", EG bedeutet "Erdgeschoss", DG bedeutet "Dachgeschoss" und DA ruft eine Außenansicht auf. Durch die Schaltfläche "-1" kann von einer Ebene auf eine niedrigere Ebene gewechselt werden. Die Schaltfläche "i" ruft weiterführende Informationen des Objekts auf. Diese Informationen werden wie die 3D-Daten von dem Daten-Server 7 geliefert. Auf der linken Seite sind zwei mit "innen" und "außen" bezeichnete Schaltflächen angeordnet, durch deren Betätigung der Benutzer zwischen einer Innenansicht der Immobilie und einer Außenansicht umschalten kann.

Durch Antippen einer der genannten Schaltflächen werden bestimmte Teile oder Komponenten des virtuellen Modells ausgeblendet bzw. eingeblendet. Beim Antippen der Schaltfläche "KG" werden lediglich Bestandteile des Kellergeschosses angezeigt.

Durch Antippen der Schaltfläche "innen" wird zu einer Innenansicht des Hauses 11 umgeschaltet. Dem Benutzer wird dann der Eingangsbereich des Hauses 11 virtuell dargestellt. Bestimmte in die Darstellung eingeblendete und farblich abgesetzte Zeichen, beispielsweise ein Kreis oder ein Viereck, zeigen dem Benutzer an, dass er von dem momentanen Standort in einen anderen Raum wechseln kann. Auf diese Weise kann der Benutzer das Haus 11 unter dem Eindruck von erweiterter Realität durchschreiten und sich einen Eindruck von außen und innen verschaffen. Dabei kann er alle Stockwerke und alle Räume durchlaufen, indem die entsprechenden 3D-Daten vom Daten-Server 7 abgerufen werden. Die Räume sind dabei als 360°-Panoramaaufnahmen hinterlegt, so dass ein äußerst realistischer Eindruck erzeugt werden kann. Der Benutzer kann bestimmte Ansichten als Screenshot speichern und später abrufen.

Bei dem Verfahren besteht die Möglichkeit, dass der Benutzer bestimmte Parameter des virtuellen Modells verändern kann. Beispielsweise kann er eine Innenwand verschieben oder unsichtbar machen. Daneben kann er Möbel darstellen, an eine gewünschte Position verschieben oder wieder löschen. Der Benutzer hat auch die Möglichkeit, eine Gebäudeöffnung wie ein Fester oder eine Tür in einer Außenwand zu erzeugen, auszublenden und/oder die Größe und/oder die Position der Gebäudeöffnung zu verändern. Auf diese Weise wird die Möglichkeit einer Interaktion geboten, so dass der Benutzer von ihm gewünschte Änderungen ausprobieren kann. Demnach kann er die Farbe von Wänden verändern, die Position von Türen oder Fenstern verschieben oder deren Größe verändern. Das geänderte virtuelle Modell kann auf dem Daten-Server 7 und/oder in einem Speicher des Mobilgeräts 18 gespeichert werden.

Durch Betätigen einer angezeigten Schaltfläche kann ein Kontakt zu einem Berater hergestellt werden, beispielsweise zu dem Anbieter oder Vermittler einer Immobilie. Der Benutzer kann auf diese Weise dem Berater eine Nachricht in Form einer E-Mail oder einer SMS übermitteln. Alternativ kann auch eine Telefonverbindung hergestellt werden. Daneben können Nutzerdaten an den Berater gesendet werden, so dass er erfährt, welche Personen sich für ein bestimmtes Objekt interessieren, so dass er diese Interessenten gezielt kontaktieren kann.

Optional kann zwischen einem "Video-Reality-Modus" (VR-Modus) und einem "AR-Modus" (Augmented Reality) umgeschaltet werden. Im AR-Modus kann der Benutzer das entsprechende Objekt - wie bereits beschrieben - drehen und aus unterschiedlichen Blickwinkeln betrachten sowie vergrößern und verkleinern, wobei das virtuelle Modell und das Druckerzeugnis überlagert dargestellt werden. Der VR-Modus ermöglicht ein Begehen der einzelnen Räume, die in einer Panoramaansicht mit einem 360°-Blickwinkel angezeigt werden.

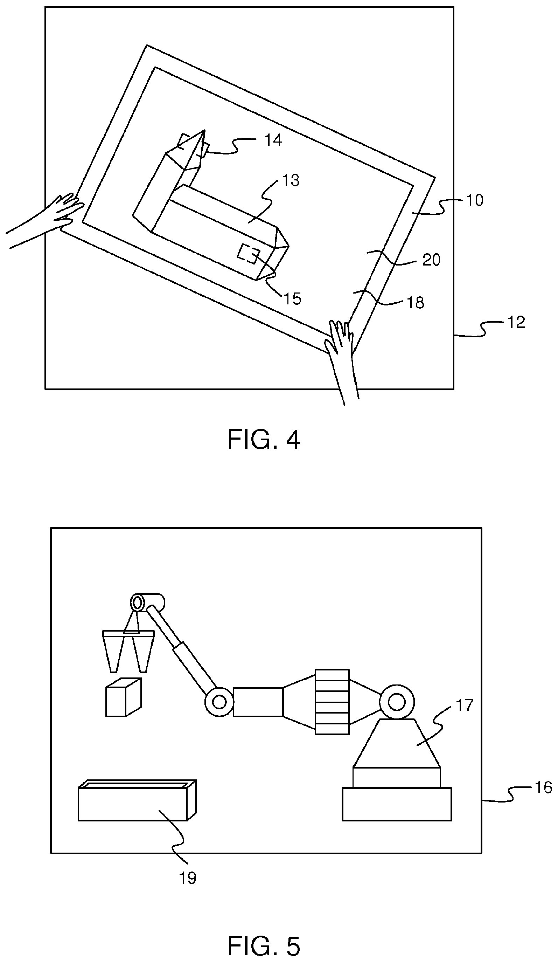

Fig. 4 zeigt ein Ausführungsbeispiel des erfindungsgemäßen Verfahrens, bei dem touristische Informationen zur Verfügung gestellt werden. Nach dem Scannen eines optisch lesbaren, jedoch für das menschliche Auge unsichtbaren Markers, der sich auf einer Informationstafel 12 befindet, wird ein virtuelles Modell einer Sehenswürdigkeit, bei der es sich in diesem Fall um eine Kirche 13 handelt, auf der Anzeigefläche 20 des Tablet-Computers 10 angezeigt. In Fig. 4 erkennt man, dass das virtuelle Modell der Kirche 13 Schaltflächen 14, 15 aufweist, nach deren Anwählen weitere Informationen ausgegeben werden. Diese Informationen können entweder optisch angezeigt oder akustisch ausgegeben werden. Da die Schaltflächen 14, 15 verschiedenen Bereichen der Sehenswürdigkeit zugeordnet sind, kann der Benutzer durch Betätigen einer Schaltfläche 14, 15 in dem virtuellen Modell navigieren und somit die Sehenswürdigkeit virtuell "durchwandern".

Fig. 5 zeigt ein weiteres Ausführungsbeispiel des Verfahrens zum Erzeugen des Eindrucks von erweiterter Realität. Auf einem Druckerzeugnis 16, bei dem es sich in diesem Fall um eine Seite einer Zeitschrift handelt, ist ein Roboter 17 abgebildet. In dieser Darstellung ist der optisch lesbare Marker 19 versteckt. Nach dem Scannen des Markers 19 mittels des Mobilgeräts 18 werden die in dem Marker 19 enthaltenen Daten durch die auf dem Mobilgerät 18 vorhandene Client-Software 3 erfasst. Anschließend wird eine Verbindung zu dem Datenbank-Server 4 hergestellt. Daraufhin werden Objektdaten von dem Datenbank-Server 4 abgerufen, wobei die Objektdaten eine Adresse von 3D-Daten umfassen. Die 3D-Daten werden in diesem Fall von dem Daten-Server 7 abgerufen. Anschließend wird ein virtuelles Modell des Roboters 17 auf der Anzeigefläche 20 des Mobilgeräts 18 dargestellt. Durch Anwählen einer Schaltfläche 14, 15 kann eine Animation gestartet werden, um dem Benutzer die Funktion des Roboters 17 zu vermitteln. Daneben sind weitere Schaltflächen 14, 15 vorhanden, so dass der Benutzer den Roboter 17 steuern und sich so ein Bild von dessen Funktionen machen kann. Auf diese Weise kann ein Artikel in einer Zeitschrift oder eine Anzeige in einer Zeitschrift mit einem dreidimensionalen, virtuellen Modell verknüpft werden, das vom Benutzer interaktiv wahrgenommen werden kann. Demnach können dem Benutzer aussagekräftige Informationen, Produktdetails, Funktionalitäten und weitere Informationen vermittelt werden. Die auf dem Daten-Server 7 hinterlegten Informationen, anhand denen das virtuelle Modell generiert wird, können selbstverständlich durch den jeweiligen Anbieter aktualisiert werden, so dass dem Benutzer zu jedem Zeitpunkt aktuelle Daten und ein aktuelles virtuelles Modell vorliegen, was mit herkömmlichen Printmedien nicht möglich ist.

### Bezugszeichenliste

- 1: Schritt
- 2: Schritt
- 3: Client-Software
- 4: Datenbank-Server
- 5: Schritt
- 6: Schritt
- 7: Daten-Server
- 8: Schritt
- 9: Schritt
- 10: Tablet-Computer
- 11: Haus
- 12: Informationstafel
- 13: Kirche
- 14,15: Schaltfläche
- 16: Druckerzeugnis
- 17: Roboter
- 18: Mobilgerät
- 19: Marker
- 20: Anzeigefläche

## Patentansprüche

1. Verfahren zum Erzeugen des Eindrucks von erweiterter Realität, mit den folgenden Schritten:
- Scannen eines optisch lesbaren Markers (19) mit einem Mobilgerät (18),
- Erfassen von in dem optisch lesbaren Marker (19) enthaltenen Daten,
- Aufbauen einer Verbindung zu einem Datenbank-Server (4) durch eine Client-Software (3),
- Abrufen von Objektdaten durch die Client-Software (3) von dem Datenbank-Server (4) anhand der in dem optisch lesbaren Marker (19) enthaltenen Daten, wobei die Objektdaten eine Adresse für 3D-Daten umfassen,
- Abrufen der 3D-Daten von dem Datenbank-Server (4) oder einem Daten-Server (7), und
- Darstellen eines auf den 3D-Daten beruhenden virtuellen Modells auf einer Anzeigefläche (20) des Mobilgeräts (18).

2. Verfahren nach Anspruch 1, **dadurch gekennzeichnet, dass** ein reales Objekt, das vorzugsweise Bestandteil eines Druckerzeugnisses (16) ist, und das virtuelle Modell auf der Anzeigefläche (20) des Mobilgeräts (18) überlagert dargestellt werden.

3. Verfahren nach Anspruch 2, **dadurch gekennzeichnet, dass** das reale Objekt mittels einer Kamera des Mobilgeräts (18) erfasst wird.

4. Verfahren nach einem der vorangehenden Ansprüche, **dadurch gekennzeichnet, dass** durch Bewegen des Mobilgeräts (18) relativ zu dem optisch lesbaren Marker (19) die Darstellung des virtuellen Modells auf der Anzeigefläche (20) verändert wird.

5. Verfahren nach einem der Ansprüche 2 bis 4, **dadurch gekennzeichnet, dass** ein unsichtbar in einer Darstellung des Druckerzeugnisses (16) angeordneter Marker (19) verwendet wird.

6. Verfahren nach einem der vorangehenden Ansprüche, **dadurch gekennzeichnet, dass** beim Berühren einer auf der Anzeigefläche (20) angezeigten Schaltfläche (14, 15) eine Aktion ausgelöst wird.

7. Verfahren nach Anspruch 6, **dadurch gekennzeichnet, dass** beim Auslösen der Aktion eine Animation und/oder eine Audiodatei abgespielt und/oder ein Text eingeblendet wird.

8. Verfahren nach einem der vorangehenden Ansprüche, **dadurch gekennzeichnet, dass** das virtuelle Modell verschiedene Komponenten oder Teile umfasst, die durch eine Touch-Eingabe eingeblendet oder ausgeblendet oder verschoben oder gedreht oder in Bewegung versetzt werden können.

9. Verfahren nach einem der vorangehenden Ansprüche, **dadurch gekennzeichnet, dass** das virtuelle Modell in einer Panoramadarstellung angezeigt wird, die sich vorzugsweise über einen Bereich von 360° erstreckt.

10. Verfahren nach Anspruch 9, **dadurch gekennzeichnet, dass** das virtuelle Modell verschiedene Bereiche umfasst, wobei der Benutzer durch eine Eingabe einen gewünschten Bereich des virtuellen Modells, der auf der Anzeigefläche (20) dargestellt wird, auswählt.

11. Verfahren nach einem der vorangehenden Ansprüche, **dadurch gekennzeichnet, dass** das virtuelle Modell nach dem Abrufen von dem Datenbank-Server (4) oder dem Daten-Server (7) in einem Speicher des Mobilgeräts (18) gespeichert wird.

12. Verfahren nach einem der vorangehenden Ansprüche, **dadurch gekennzeichnet, dass** beim Anwählen einer Schaltfläche (14, 15) eine Funktion zum Senden einer E-Mail oder zum Aufbau einer Telefonverbindung ausgelöst wird.

13. Verfahren nach einem der vorangehenden Ansprüche, **dadurch gekennzeichnet, dass** ein Gerät der folgenden Gruppe als Mobilgerät verwendet wird: Smartphone, Tablet-Computer, Notebook mit berührungssensitiver Anzeigefläche, Videobrille, Datenbrille, Helmdisplay, VR-Helm.
